(19) Europäisches Patentamt

European Patent Office

Office européen des brevets

(11) **EP 1 050 991 A1**

(12) **EUROPEAN PATENT APPLICATION**

(43) Date of publication:
08.11.2000 Bulletin 2000/45

(51) Int Cl.⁷: **H04L 9/00**

(21) Application number: 99650038.5

(22) Date of filing: 27.04.1999

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **Sientescom Developments Limited Dublin 2 (IE)**<br><br>(72) Inventors:<br> • **Roche, Patrick John**<br>  **Maryborough Hill, Douglas, County Cork (IE)** | • **Walshe, John**<br>  **Coachford, County Cork (IE)**<br> • **Fitzpatrick, Patrick**<br>  **Bishopstown, Cork (IE)**<br> • **Murnane, Liam**<br>  **Maryborough Hill, Douglas, County Cork (IE)**<br><br>(74) Representative: **O'Connor, Donal Henry**<br>  **c/o Cruickshank & Co.,**<br>  **1 Holles Street**<br>  **Dublin 2 (IE)** |

(54) **A dynamic validation system**

(57)    A dynamic validation system is provided using cryptography. A host (1) having a main system processor (10) communicates with terminals (4(a) 4(b) 4(c) 4 (d)) through a public communications network (2). The host (1) has a secure database (11) to store for each terminal (4(a) 4(b) 4(c) 4(d)) a unique encryption key, a unique terminal identifier and a unique public communications network location identifier. At regular intervals the system uses a cryptographic system to generate a new unique key for each terminal which unique key is then used in another cryptographic system for data transmission, the latter requires much less computation time than that for key generation to allow speed of processing while the unique key which is regularly changed provides enhanced security. Further, each terminal (4(a) 4(b) 4(c) 4(d)) has a plug-in card (7) with a separate processor (75) i.e. to that of the terminal (4(a) 4(b) 4(c) 4(d)) such that the processor (75) on the card (7) shares the encryption and decryption with the custom logic chip (77).

Fig. 1

## Description

The present invention relates to a dynamic validation system for high-speed data processing with cryptography and in particular to the processing of transactions at high speeds when the system is subject to severe demand imbalances.

Such systems generally comprise a host having a main system processor, a plurality of terminals each having a terminal processor, a public communications network connecting the host and terminals and a secure server database for the host comprising for each terminal a unique encryption key, a unique terminal identifier and a unique public communications network location identifier. These systems can be used for example for trading on stock exchanges, for communications between financial networks and so on. However, most of these do not involve large numbers of terminals, or indeed regular demand imbalances. Such demand imbalances as occur usually arise because of mass unannounced calling which mass unannounced calling arises due to some unpredictable outcome that usually leads to other problems, not just simply at the host computer, but, more commonly in the public communications network in which the mass unannounced calling is taking place.

However, for example, in gaming machines such as for playing the game Lotto, the demand imbalances are caused by mass calling of people who wish to input their games into the terminal, which mass calling usually is fairly predictable in the sense that if the Lotto draw takes place at a particular hour of the day then the hour before that will lead to a substantial increase in people playing the lotto. Similarly, if the terminals are being used to place bets on the outcome of a particular sporting event, then there will be an increased demand on the terminals some time before the start of the sporting event and then even the imbalance can be localised. Thus, there may be an enormous demand on the terminals in a particular locality, because a local football team is playing, while over the rest of the country the system is being under-utilised. Such imbalances can be many times the mean usage of a terminal.

There are also problems at the host computer. For example, in a typical situation, it would not be unusual for a host computer to be handling over 15,000 terminals and it is envisaged in certain gaming situations that each terminal, often a PC, will send a request every fifteen seconds to the master computer. In a typical gaming situation the size of the package could be as high as 1600 bits and then the reply sent by the host computer to the terminal can be of the order of 400 bits in size. Then the total host computer system will have to handle approximately 1000 transactions per second, presuming there are 15,000 terminals and it will need to transmit at an average data rate of approximately 1600 Kbit/second.

Generally the operation starts when a terminal scans a game input, then the terminal transmits that information to the host computer, where it is stored. The host computer has to then validate the game, accept it and receipt it. The receipt then has to be delivered back to the terminal which then has to print out the receipt confirming the game has been played, which receipt is then given to the customer.

Irrespective of the problems which can be encountered in the host computer such as those referred to above, it would appear to be a relatively simple task, even if this is done by cryptography as the time taken to do the actual computations, even a relatively complex form of cryptographic system would not be that long. Thus, one can well envisage that some cryptographic systems such as RSA, which uses a relatively long key could easily be used. Such an assumption is totally incorrect and takes no account of the practicalities of the situation. In practice, what happens is that in a queue one person may have the equivalent of 80 or so games to be played, each of which has to be separately encrypted, delivered to the host computer, acknowledged, sent back as an encrypted message, then de-crypted at the terminal. Thus, while for example, in a total overall transaction time of 1.4 seconds or so encryption might only take 0.1 seconds, it suddenly becomes appreciable if there are 80 or 100 transactions being done in each one because now each game to encrypt will take 0.1 seconds so that the total encryption time will be 10 seconds, which is totally unacceptable. For this example 100 slips x (0.8 sec loop time + 0.1 sec encryption) + 0.5 sec print time = 90.5 sec so that encryption adds approximately 12.5% delay to the total transaction time. Even accepting the problem that would arise with customers that are kept waiting, particularly when the time limit is approaching for placing the bet or playing the particular game, there are further problems.

It will be appreciated that encryption and the length of time taken to encrypt the message becomes significant, since the processing time for doing such encryption on the one terminal can be very large and equally large at the host computer. It can become very difficult to update a terminal to make it faster. Thus, speed of encryption would appear to be a major problem. Heretofore this has not been adequately addressed, the major emphasis has been on security.

Many methods and systems have been proposed to improve encryption, such as, for example, in U.S. Patent Specification No. 5,737,419 (Bell Atlantic Network Services, Inc.). One of the interesting features of the invention disclosed in this patent specification is the regular updating of the user's private key, such that a temporary RSA private-public key pair is generated on-line in real time and the user and the authentication server collaborate to assign the public portion of this temporary key to create a temporary certificate which is valid for say eight hours. The authentication of this temporary pair is verified using a long term public key. Again while there is manipulation of the keys in this invention, they are purely to improve the overall security of the communications, which is done in this particular invention by generating a temporary asymmetric crypto-key having a temporary key portion and associated secondary key which are then encrypted. Speed of encryption is not addressed.

European Patent Specification No. 0 649 120 (Pitney Bowes Inc.) discloses a system for controlling the validity of printing of indicia mailpieces from a potentially large number of users of postage meters, which includes an encryption key that may be changed at predetermined intervals or on a daily basis, or indeed for printing each mailpiece. Again this is done to increase the security of the system.

European Patent Specification No. 0 197 392 (International Business Machines Corporation) describes a method for authenticating nodes or users in protecting data flow between nodes, which is facilitated by creating a dialogue involving authenticated encryption among the nodes: during each session a key for use in cryptographic conversion is constructed among the known participants in order to permit symmetric authentication. The key is unique for the session. A different key is generated for each and every session. The whole purpose of the invention is to devise a method for establishing a common session key between the nodes and users to a cryptographic communications session. Obviously with a large number of participants it is essential that new keys be generated on a regular basis to ensure the security of the system.

Generally speaking in relation to the payment to a prize winner of a lottery or other game the operators have been concerned with different problems, mainly of storage and security. While there is also a desire to keep the validation speeds high and this problem is, for example, articulated in U.S. Patent Specification No. 5,499,816 (Scientific Games Inc.), this specification also attempts to address the problem that if lottery terminals are to be capable of determining whether any given ticket presented for payment has been paid already. Thus, to avoid fraud the lottery terminals must have access to a database which contains information as to which tickets have already been paid. Further the database must be able to convey information at high speeds so that the validation process takes only a few seconds. There are various methods of doing this described in this specification such as the use of a compression and encryption process to store its data compactly. A very complex method of storing the information is used so that spying on a ticket's status by accessing the database is extremely difficult.

In all of the solutions to the problems heretofore proposed, they have essentially been two-fold. You increase the security of the encryption by whatever means possible and if necessary you increase the processing power of the various terminals, host computers, etc. both of which are relatively expensive solutions to the problem which is one of security combined with speed. It will be appreciated the processing time for doing encryption on the one terminal can be very large and it would be very difficult to change the terminal to make it faster. Thus the only way would probably be to replace terminals and as encryption gets more sophisticated and the size and strength of computers available becomes larger, the time taken to break most encrypted messages will become less, thus the operators of such systems are under considerable pressure.

In summary, the number of terminals being serviced by host computers in systems such as discussed above, are increasing at a phenomenal rate. The whole growth of the Internet has added to this and in the particular the popularity of dedicated terminals have been increasing and are now being used for many tasks where security is very important, such as for gaming as mentioned above, but also for matters such as hotel and airline reservations and other services that effectively have to be instant and on-line. Then computers are becoming more powerful and cheaper, thus brute force decryption becomes easier in that the tools required to carry out such brute force decryption are more easily available and affordable and the cryptographer can invest in extremely powerful parallel computation machinery, which will be able to break a system down more quickly than it was possible heretofore.

One of the most popular standard encryption techniques used for non-military applications is the U. S. Governments 56-bit Data Encryption Standard (DES). Many financial institutions use this 56-bit DES currently. Earlier this year Electronic Frontier Foundation a U.S. organisation decoded a 56-bit DES message in less than twenty-two hours. This reinforces the problems in relation to encryption. Indeed it is becoming apparent that any encryption system installed today has to take account of the very real possibility that in the not too distant future the time taken to decode it will become a matter of hours and will thus pose a security risk.

Further the volume of trade in these systems is becoming more valuable in monetary terms and this in turn increases fraud as it makes it more attractive for a cryptographer to invest in this machinery to break down the code.

An increasingly important problem that has been mentioned already and which cannot be over-emphasised is that as encryption gets better, but more complicated, the time taken to encrypt increases. A further problem with a major amount of cryptological research is that it is carried out in secret government establishments, such as the U.S. National Security Agency, which do not publish their results in open literature and therefore one must always have the underlying fear that there are other ways of breaking the cryptographic system which is not known to the general public.

The problem with fraud particularly in the gaming machine situation is that the cryptographer might be seeking to subvert the system to place bets and gain financial reward without any outlay, to incorporate false data into the system thereby causing non-winning bets to become winners, to influence the odds on a gamble, for example a horse race, or to determine the result of an event and delay its notification to a terminal until the winning bet had been placed, or otherwise interfere with the timing of message transmission and receipt for the same purpose. There are probably many other types of fraud which can be exerted onto gaming machines, however some of the former are specific to gaming machines rather than to other devices.

The problem is that as encryption gets better, computation time increases and the customer requires instant service while expecting that the gaming machine operates a system that is secure and fraud proof. The customer is not prepared to wait while such security operations take place.

In addition to the above mentioned problems of a gaming machine, which are a particular target for criminals, there is the added problem, as mentioned already, that in certain situations and at certain times of the day there will be mass calling at and use of the terminals, thus, the system will suffer from overload at certain times of the day.

The present invention is directed towards providing a solution to these problems and in particular to a solution of the problem as defined above of encryption with massed calling and with speed of processing.

## Statements of Invention

According to the invention there is provided a dynamic validation system for high speed data processing with cryptography comprising:

a host having a main system processor;

a plurality of terminals each having a terminal processor;

a public communications network connecting the host and terminals;

a secure server database for the host comprising for each terminal a unique encryption key, a unique terminal identifier and a unique public communications network location identifier, characterised in that the host and the terminals communicate at regular intervals by one cryptographic system to generate a new unique key for each terminal for subsequent encryption of data by another cryptographic system;

each terminal includes a separate plug in card having a processor and a separate custom logic chip; and

in which the encryption and decryption of data is shared between one of the processors and the custom logic chip.

The advantage of this system is that a much less onerous cryptographic system i.e. one that takes less processing time can be used since the new key is generated at regular intervals. With regular replacement of keys greater security is achieved as one would expect. However, it is the possibility of separating the provision of the key from the data encryption system that is all important since once the generation or provision of the key is secure and regularly up-dated then the rest of the system is more secure.

A further advantage is that by sharing the encryption and decryption of data between more than one processor it is always possible to increase the speed and further if it should become necessary to increase the speed further and for example the total computational speed of the processing card is not sufficient for its purposes, then the card can simply be replaced.

Ideally the processor used for encryption and decryption of data is the card processor. As well as being an efficient use of the plug in card it facilitates updates of the system in the future in an economical and controlled way in that a systematic update of the system, for example, speeding up of the processing power of the most used terminals can be achieved without affecting the system.

Preferably the cryptographic system used for generation of the encryption key for each terminal is one which is not time critical and may require considerably more computational time than for subsequent encryption of data which has a computational throughput of more than 20 K bits per second for each terminal. Essentially what one is doing here is producing a key which is almost impossible to break over a finite period of time and allowing the encryption of the actual data to take less computational time. This is enhancing the resistance of the encryption algorithm to brute force attack by changing the key in a secure manner rather than increasing the complexity of the encryption algorithm and consequential reduction in data throughput rates.

Ideally the computation al throughput for subsequent encryption of data is more than 50 K bits per second. This will ensure that, for example, in gaming machines there will not be inordinate delays.

Ideally the new unique encryption key for each terminal is generated at least every twenty four hours. The security of this is obvious. Firstly the key is changed on a regular basis secondly every terminal has its own unique key and therefore a cryptographer trying to decrypt the data will have considerable difficulties, even if computers having considerable power are used.

In another embodiment of the invention the new unique encryption key for each terminal is generated each time the terminal is powered on. This will often in practice mean once every 24 hours, but could in practice mean more than that. For instance terminal operators could be instructed to close down the terminal at certain times of the day, for example, it might be possible to instruct terminal operators to close down their terminals one hour before a particular event and thus ensure that when the busiest time is encountered by the terminal and where the most traffic is transmitted between terminal and host that this is a very short time period within which it would be virtually impossible for a hacker to decrypt the information. It would also be possible to use a polling operation between a number of terminals, whereby the terminals would sequentially shut down to allow a new key to be generated.

In another embodiment of the invention the new unique encryption key for a terminal is generated when the volume of traffic being handled by the terminal falls below a predetermined level. When a terminal is not being used, or when the volume of traffic is very light then shutting the terminal down to provide a new unique encryption key is not likely to cause any difficulty since there is unlikely to be a queue at the terminal and therefore the delay experienced by a person who has just arrived at the terminal cannot be longer than the relatively short time required to provide the new unique encryption key, by re-executing the Diffie-Hellman algorithm which in computation time would be of the order of one second. This operation would be performed in parallel on all the terminals in the system or, alternatively, individual terminals may have their encryption key changed. The terminal will not have to be shut down to change the encryption key.

Preferably there is a set time interval within which the generation of the encryption key and the subsequent cancellation and replacement by the new encryption key will not take place. The continuous generation of new encryption keys at a terminal experiencing low traffic is undesirable as this could cause a problem with the host computer in that, for example, out of 1500 terminals, 500 might be idle and the other 1000 terminals might be operating at full capacity. In such a situation it is undesirable to cause the host computer to compute and download new unique encryption keys for those terminals which are effectively idle. It is generally felt that the time interval should be greater than two hours, but again this may change if the level of skill of those involved in decryption becomes such as to require the generation of a new unique encryption key at a shorter interval. However, for the present moment and for the foreseeable future it is felt that a time interval of two hours would be more than sufficient.

The terminal's encryption key may be deleted on the terminal being powered off. In many situations it may not be desirable to do this, for example, if the encryption key is to be used on power-on to develop a new encryption key then it may be preferable to keep the key stored until the next power on.

Further the invention provides a system in which:

the unique terminal identifier includes a permanent identifier and a variable identifier;

the host has a means for generating unique variable identifiers;

at defined time intervals the host generates a new variable identifier and transmits it to the terminal for cancellation of the previous variable identifier and for subsequent use; and

the terminal includes permanent storage means for storing the variable identifier until another identifier is generated.

All terminals will have their own unique permanent identifier which can, however, be relatively easily accessed. There could be advantages in producing another unique identifier which would effectively act as a session identifier which in the event of a subsequent dispute might be of importance in verifying and authenticating a particular transaction. Thus having another unique terminal identifier which is variable further increases the security of the system.

Ideally the system is such that each card has a storage buffer, is connected to the terminal through a communications port and in which an inhibiting means is provided for the board for preventing the transmission of other data to the communications port from the terminal as long as data from a current transmission is being processed by the card. This prevents data corruption. Effectively this becomes a virtual COM port in that it is now totally dedicated to the particular data and no other data can be transmitted through the port.

Ideally on opening the communications port the signaling means indicates whether encryption or decryption is to take place. In this way once it is known that encryption and decryption is taking place the port can be left alone. However, it is important to know what is happening as in many instances the type of operation that takes place could be crucial to control.

Further the unique key is produced by a Diffie-Hellman algorithm and preferably the Diffie-Hellman algorithm is generated and transmitted by the other cryptographic system using the previously generated unique key. This further increases the security of the system.

Further the cryptographic system for the data is a DES algorithm with S-box and ideally the S-box is encoded within the custom logic chip of the plug in card.

Ideally the S-box is stored on a register of the custom logic chip and is changed each time the unique key is generated.

## Detailed Description of the Invention

The invention will be more clearly understood from the following description of a preferred embodiment of the invention, where the invention is illustrated.

Fig. 1 is a logical block diagram showing the apparatus of the present invention;

Fig. 2 is a block diagram to show functionality of a PCI card used in accordance with the invention;

Fig. 3 is a flow diagram of key generation at the host and terminal;

Fig. 4 is a block diagram illustrating a DES algorithm used according to the invention;

Fig. 5 is a block diagram showing a further detail of the algorithm.

Fig. 6 is a flow diagram of the system;

Fig. 7 is a continuation of the flow diagram of Fig. 6;

Fig. 8 is a continuation of the flow diagram of Fig. 7; and

Fig. 9 completes the flow diagram of Figs. 7 and 8.

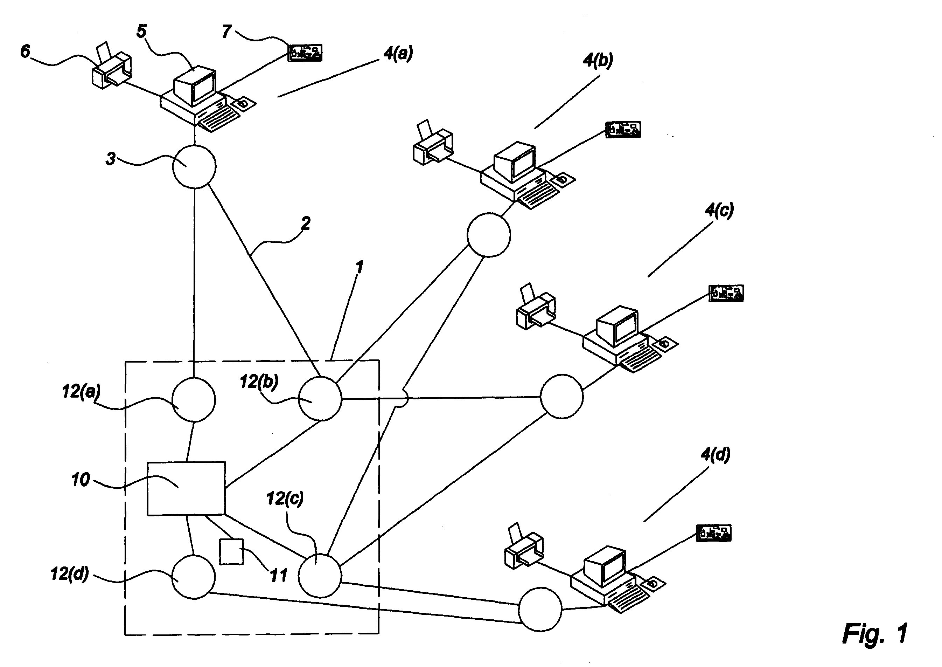

With reference to Fig. 1 a dynamic validation system in accordance with the present invention is shown. The system includes many pieces of hardware and incorporates software. Because there are many types of hardware, computers, servers and the like that could be used to carry out the invention, the units making up the invention will be described primarily in accordance with their function and therefore when specific types of equipment are mentioned, it should be appreciated that this equipment and the mention of it is not limiting as many other types of equipment could be used instead of the particular unit described. Indeed for carrying out the particular function allocated in this description to that unit. Many totally dissimilar units could be used or the one unit could carry out many functions.

There is provided a host 1 which consists of a collection of units which will be described in more detail and are surrounded by the interrupted line in Fig. 1. The host 1 is connected through a public switch communications network 2, which would generally be connected by an ISDN line to an external adapter 3 forming part of the telecommunications network 2 which in turn forms part of a terminal indicated generally by the reference numerals 4(a) to 4(d). Only four terminals are illustrated, but the number obviously is of the order of thousands. Each terminal 4 incorporates a computer 5, printer and scanner 6 and has inserted therein a plug-in card 7, which obviously will not be normally physically removed from the computer 5. The plug-in card 7 has a processor and a custom logic chip. The host 1 comprises a host computer 10 which is connected to a secure database 11 and is also connected to a series of front end processors provided by on-line servers 12(a), 12(b), 12(c) and 12(d), only four on-line servers 12 are illustrated, which carry out some of the tasks for the host computer 10. In one embodiment, the terminals 4 are regular PCs which are connected to an ISDN line configured to run the X25 protocol. The adapter 3 allows the computer 5 to communicate through a standard asynchronous V24 serial port using the X28 protocol. This enables the PC to communicate with the on-line servers 12 using ASCII text only. In the present embodiment each on-line server 12 handles somewhere between 200 and 500 terminals.

In the embodiment it will be noted that only two of the on-line servers 12(b) and 12(c) are connected to more than one terminal 4. This is done to provide redundancy so that if one on-line server 12 ceases to operate that the other terminals 4 may continue to operate. In many applications this may not be necessary.

Each terminal 4 has its own identifier and obviously each adapter 3 has its own identifier, thus each terminal 4 has two unique identifiers and as will be described hereinafter, it is possible to provide other unique identifiers which can, for example, be variable. Generally speaking the terminal ID would be a hardwired serial number or identifier that is provided with the terminal 4 on manufacture.

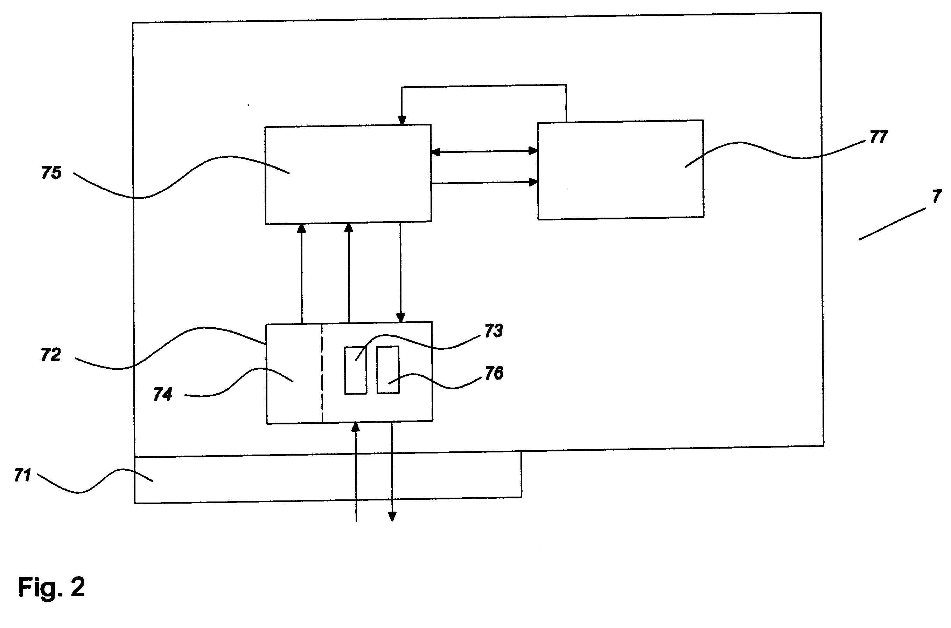

Further the computer 5 forming the terminal 4 is a standard PC as mentioned above and will have application software housed on its hard drive as well as an algorithm for generating an encryption key as will be described hereinafter. On power-on the validating of the terminal 4, checking the software and generating a new encryption key takes approximately 3 seconds which is carried out in parallel in each terminal 4 in the system. Referring to Fig. 2 there is illustrated the functionality of the plug-in card 7 in this embodiment a plug and play card in which the transfer of data is shown by the arrows. There is provided a communication channel which can receive plain text, ciphertext or an encryption key and which can deliver out ciphertext or plain text. The communication channel consists of a dual port RAM 72 having a transmit buffer 73, a receive buffer 76 and a control program 74 to feed a processor 75 which controls the flow of data. Data is exchanged between the processor 75, the transmit and receive buffer and a custom logic chip 77 in which the DES algorithm is executed. The plug-in card 7 is a standard PCI card which has plug and play capabilities. The card has a processor 75 and a custom logic chip 77 namely a field programmable gate array (FPGA). The card's FPGA has means for storing the encryption key which is downloaded daily (at least) from the terminal 4. The encryption algorithm or elements of the algorithm (e.g. S-box of DES algorithm) can be easily updated by changing the FPGA content on power-up. Essentially the processor 75 in conjunction with the FPGA is used as a hardware accelerator to increase the speed of execution of the encryption/decryption.

The control of the data transfer between application software on the terminal 4 and the encryption/decryption accelerator is implemented as a 'virtual' communications port (COM port), embedded in the software stored on the terminal. The virtual COM port provides a standard software interface for terminal applications. The virtual COM port approach ensures that the encryption accelerator is accessed by only one application at a time, thus maintaining the integrity of data.

Before discussing any further the system according to the present invention which requires the generation of a new unique key for each terminal at regular intervals, which unique key is used for subsequent encryption of the data which uses an alternative cryptographic system it is necessary to discuss the encryption systems used. While many methods could be used and many types of encryption system could be used, the present invention uses a Diffie-Hellman algorithm as a key exchange protocol, followed by a Data Encryption Standard (DES) algorithm to encrypt the data. It cannot be over-emphasised that many other encryption systems and methods could be used. For example, a totally different encryption system such as RSA could be used with the host generating the key for each terminal by any chosen system and then downloading it by RSA to the terminal. It is advantageous however to describe both the Diffie-Hellman algorithm and the DES system to explain clearly their interaction.

Obviously before any exchange of information it is necessary that the terminal 4 with which key generation is being exchanged be suitably authenticated with the host 1. In its simplest this will be provided by the permanent unique identification number of the terminal 4 and the phone number interface, namely the unique identifier of the adapter 3. As will be explained hereinafter various other authentication methods could be used.

The Diffie-Hellman algorithm requires the system to generate a large prime number p (approximately 120 decimal digits). For this prime we also require a generator g satisfying

$$g^{p-1} = 1 \bmod p \text{ and } g^m \neq 1 \bmod p \text{ for any } m<p-1$$

There is usually a generator among the numbers 2, 3, 5, 7. However, in order to simplify the key exchange software, g is always chosen so that 2 is a generator. The numbers g, p do not need to be kept secret. The terminal T and the server S are required to manipulate g, p in generating the secure key k for use in the DES algorithm. The protocol is as follows:-

Terminal T chooses a random number t and computes $u=g^t \bmod p$.

Terminal transmits u to server.

Server S chooses a random number s and computes $v=g^s \bmod p$.

Server transmits v to terminal.

Terminal computes $k=v^t=(g^s)^t \bmod p$.

Server computes $k'=u^s=(g^t)^s \bmod p$.

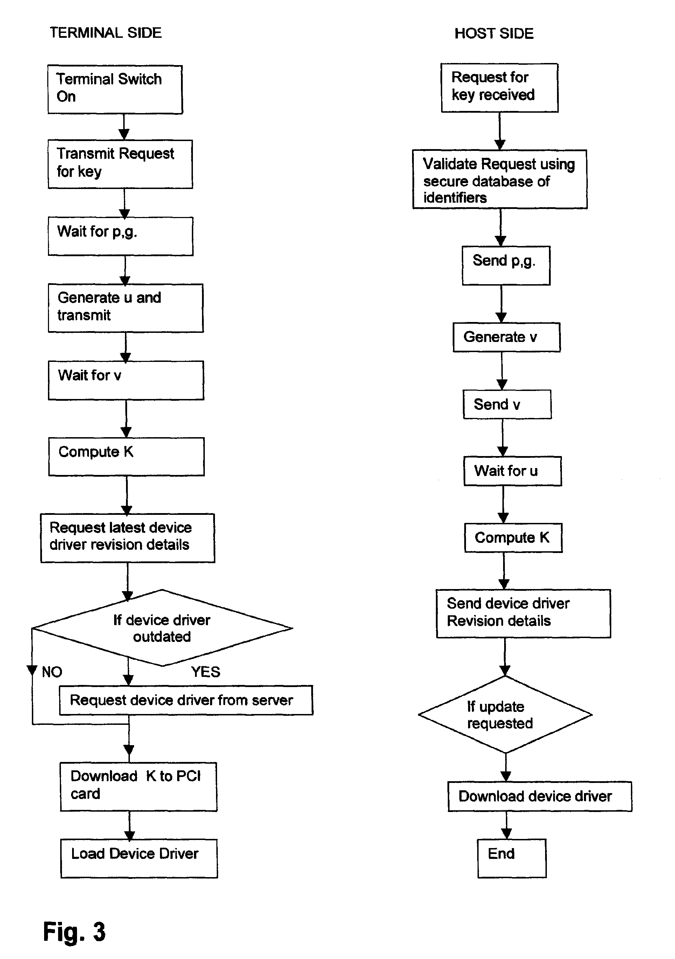

Observe that k=k' so that k can be used as the DES key. (In fact only part of k will be needed since it will have the same order of magnitude as p.) This is shown in flow diagram form in Fig. 3.

The security of this system lies in the fact that it is computationally infeasible to derive t from u (or s from v). A potential attacker observing the channel sees only u,v (and may be assumed to know g,p), and therefore cannot derive the exponents s,t required for computing the key k. However, if the attacker could interpose himself between T and S during the key exchange and generate false data then the security of the key exchange could be undermined. However, the authentication protocol mentioned earlier would detect possible fraud.

It is envisaged that other systems could be provided and will be discussed hereinafter to prevent interposition between T and S by an attacker during the key exchange.

As mentioned above, the encryption/decryption algorithm for this system is the DES algorithm with S-box which is a standard hardware algorithm to encrypt data. DES is widely used by banks and financial institutions to protect financial transactions which pass through the world's communication networks every day, DES has been designed to be optimised for hardware implementation enabling real-time data to be securely exchanged between users.

The Data Encryption Standard (DES) is a block cipher, operating on data in 64 bit blocks. A 64 bit block of plaintext is transformed into a 64-bit block of ciphertext. DES is a symmetric algorithm, this means that the same algorithm and key are used for encryption and decryption. The key is 56 bits in length and any 56-bit value can be used. The key can change at any time as long as it is known which key was used to encrypt the ciphertext. In the situation where the key can be changed at any time it is necessary to record and track such changes to prevent breakdowns in communication. The DES employs both confusion and diffusion to encrypt the plaintext. Confusion is achieved through a substitution and diffusion is achieved through a permutation. DES is composed of sixteen rounds, each of which consists of a combination of these techniques, a substitution followed by a permutation.

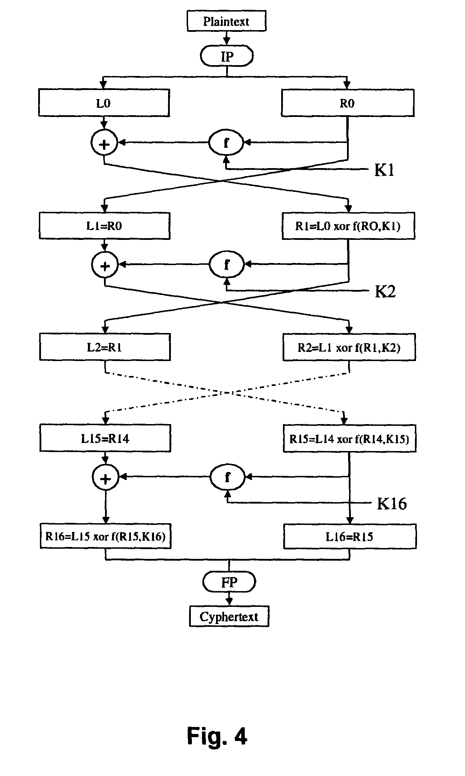

The operation of the DES is outlined in Fig. 4. After an initial input permutation (IP), the plaintext block is divided into a right half and a left half, each 32 bits in length. There are then sixteen rounds of operations, called function "f", in which the data is combined with the key. It is in these "f" boxes that the main cryptographic process takes place. The output of function $f_1$ to $f_{16}$ is then combined with the left half of the data via an XOR operation. The result of these operations becomes the new right half; the old right half becomes the new left half. These operations are repeated a further fifteen times, to make up sixteen rounds in total. After the sixteenth round is completed, the right half and the left half are joined, and a final output permutation finishes off the algorithm.

One DES round of function f is illustrated in Figure 4. The 56-bit key is divided into 28-bit halves. Each half is circularly shifted one or two bits, depending on the round. After this, 48 out of the 56 bits are selected using a compression permutation. This happens at the beginning of each round so a new subkey is generated for each round.

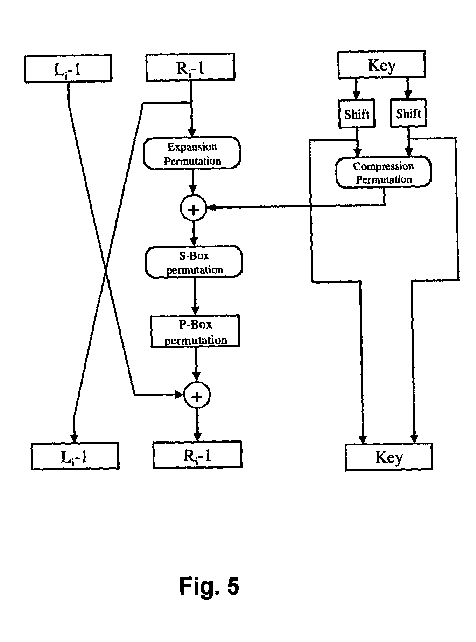

The next operation that takes place is the expansion permutation, see Fig. 5. This expands the right half of the data $R_I$ from 32 to 48 bits. This operation is necessary in order to make the right half of the data the same size as the key. The expansion permutation works by considering each four-bit block of the data. Bits 1 and 4 of the block each represent two bits of the expanded data while bits 2 and 3 represent 1 bit of the expanded data. This data is combined with the 48 bits of the shifted and permuted key, via an XOR function.

The data is sent through eight S-boxes, producing 32 new bits. The real cryptographic strength of DES lies in the operation of the S-boxes. There are eight S-boxes, each of which accepts 6 bits of the data as input and gives a 4-bit output, thus reducing the size of the data to 32 bits. Each S-box is a lookup table of 4 rows and 16 columns in which each entry is a 4-bit number. The 6-bit input specifies the row and column in which the output appears. The composition of the S boxes can vary. The purpose of this feature of the S-box is to increase the security of the encryption of data.

Finally, the 32-bit data is permuted again. This is a simple permutation, mapping each one of the 32 input bits to an output bit. The result of the P-box permutation is XOR-ed with the left half of the initial 64-bit block. Then the left and right hand halves are switched and another round begins.

The decryption process of transforming ciphertext into plaintext uses the same function f as the encryption process. The only difference is that the keys must be used in the reverse order. Thus, if the keys for encryption are $K_1$, $K_2$, $K_3$, ... ..., $K_{16}$, then the keys for decryption are $K_{16}$, $K_{15}$, $K_{14}$, ..., $K_1$. The algorithm that generates the key for each round is circular as well. For encryption the shift is to the left and the number of positions shifted is 1,1,2,2,2,2,2,2,1,2,2,2,2,2,2,1. For decryption, the shift is to the right and takes place after each subround.

For the system, the hardware and software interact in the following way. Each morning, for example, when a terminal 4 is turned on or powered up, the Diffie-Hellman algorithm which is executable stored on disk and executed on power up in the memory of the PC and the OLS server 12 is executed to generate a secure encryption key. Each terminal 4 is expected to generate a different random number t and therefore a different u to generate a new encryption key k. The OLS server 12 will hold a data table which has a list of each terminal 4 and a list of the key associated with that terminal 4. When a packet of information arrives at the server from the terminal 4, it first checks which terminal 4 it came from, then it looks up the data table for the key associated with that terminal and then decrypts the information. The list of encryption keys is housed in a secure database 11 of the server. The encryption key for the terminal is stored in a register at the FPGA.

The reason for changing the key on a regular basis is that if you had sufficient computer power, you could test every key combination effectively in a certain length of time and given the current capabilities of high performance computers and given you had sufficient resources, let us say you had invested two million euros on a computer to undertake this, you might be able to crack the key within three hours. The implication of that then is that if you could change the key, every three hours, you are significantly reducing the chance of someone with even those resources being able to break the algorithm.

When the terminal 4 is powered-up, the key exchange protocol is evoked and the latest revision of device driver for the plug in card 7 is checked. If a new revision of device driver is required this is downloaded from the server 12. On opening the virtual COM port, the device driver is loaded. This leads to a transfer of control program 74 and custom logic configuration to the FPGA. This facilitates encryption algorithm upgrades or data updates (such as the S-box for the DES algorithm).

At the transaction stage, the data is read-in by a scanner 6 into the terminal 4. The data is sent to the card 7 for encryption. The DES algorithm is executed by partitioning the algorithm between the processor 75 on the card 7 and a custom logic chip 77, for example, an FPGA. The DES algorithm does a single repetitive computation execution sixteen times in a row. In one implementation only one round of the DES algorithm is implemented in custom logic and this is repetitively accessed by the processor to implement the full DES algorithm. In another implementation the entire sixteen rounds of the DES algorithm is implemented in custom logic. In all cases the custom logic acts as a hardware accelerator to speed up execution of the encryption of a transaction.

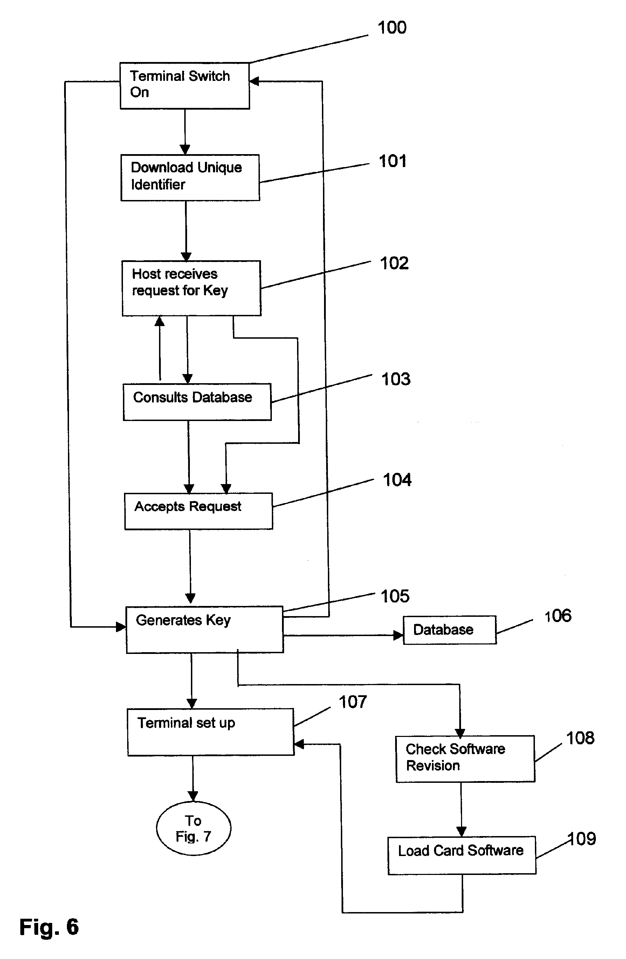

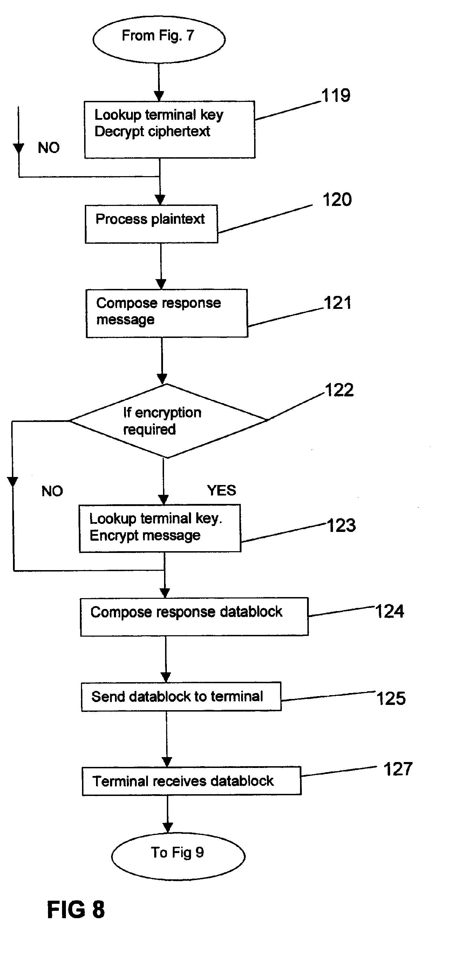

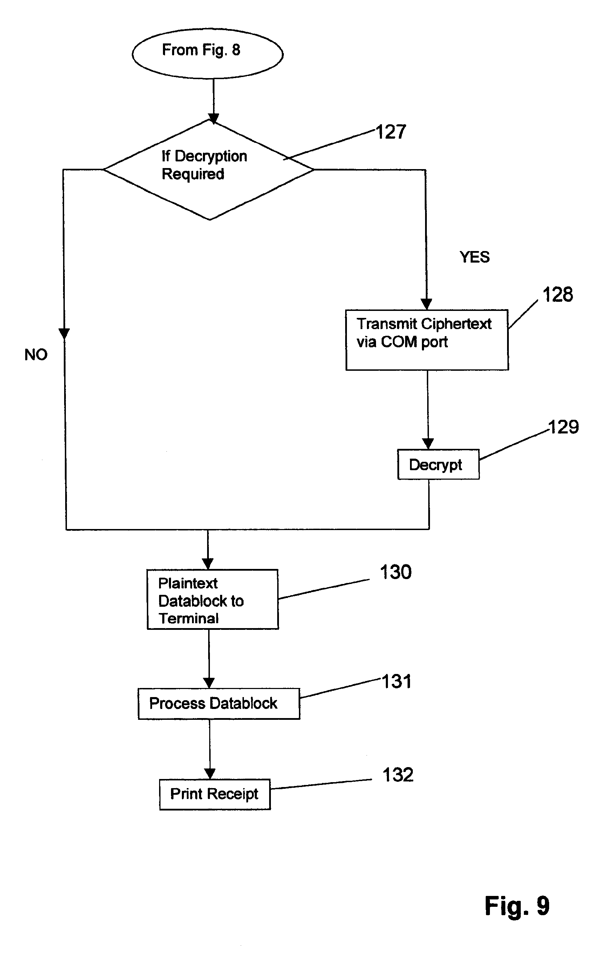

Referring now to Figs. 6 to 9 inclusive, the system according to the present invention is described in broad outline. Firstly, it is assumed that each time the system is powered on, in other words when the terminal 4 is switched or powered on, it requires a new unique terminal identifier and further it updates its own encryption system.

In step 100 the terminal 4 is switched on and the terminal 4 downloads in step 101 a unique identifier which, as explained above, can be the unique identifier of the terminal 4. Also the unique identifier of the adapter 3 which will often be the phone line number is provided by the communications network supplier. The host 1 accepts the request for the generation of a key in step 102, consults the secure database 11 of identifiers in step 103 and determines whether it is genuine or not. Presuming that it is told it is genuine, it then accepts the request in step 104 and the key is then generated at step 105 as described above using the Diffie-Hellman algorithm. The generated key is then stored by the host computer 10 in step 106 in the secure database 11 and the terminal set-up is confirmed in step 107. The flow diagram of Fig. 3 also refers. When the key is generated the revision of the PCI card control program 74 is checked in step 108 and the PCI card 77 loaded with the latest software revision in step 109.

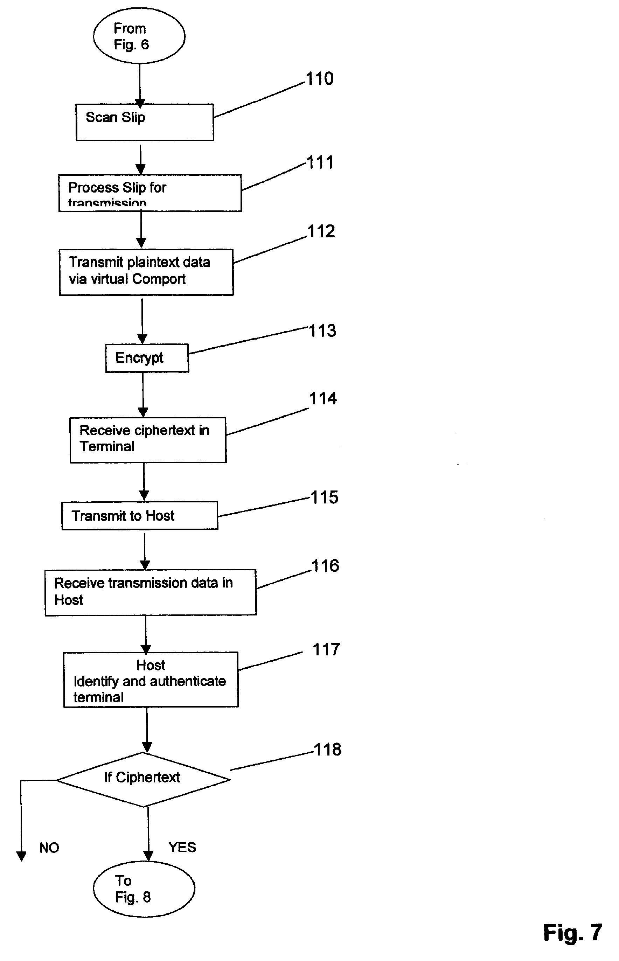

In step 110 (see Fig. 7) a slip filled out by a customer is scanned. In step 111 the terminal 4 processes the slip data and prepares it for transmission. In step 112 the data is transmitted in plain text via the virtual COM port to the PCI card 7, the buffer 73 as shown in Fig. 2 indicates whether encryption can be carried out or not. In step 113 the encryption is being carried out. In step 114 the ciphertext is transmitted via the COM port to the terminal 4 and then in step 115 to the host 1 with a header and identifier over the ISDN line. After step 115 the host 1 receives the transmission data in step 116. And in step 117 identifies and authenticates the terminal 4 from the header transmitted in step 114. In step 118 it checks firstly if it is in ciphertext and if it is using the key for that terminal 4 got from the lookup table in step 119 decrypts the ciphertext and processes it as plain text in step 120 if the step 119 is not required in the sense that the text is already in plain text step 119 is skipped. In step 121 a response is prepared for the message received by the data. Again in step 122 the data is queried as to whether it should be encrypted or not. If yes then the key for that terminal 4 is used in step 123 to encrypt the data which in step 123 is prepared for transmission to the terminal. If again there is no need to encrypt step 123 is skipped and the plain text data is then prepared for transmission in step 124. This prepared datablock which comprises a header and encrypted message is then in step 125 transmitted to the terminal 4.

In step 126 the datablock is received at the terminal side. At step 127 the terminal 4 queries whether decryption is required, if not it is sent directly in plain text into the terminal processor, if yes it is transmitted to the card 7 in step 128, decrypted in step 129 and then sent in plain text to the terminal where it is received in step 130. In step 131 the plaintext is processed and in step 132 a receipt is printed.

In the description above it has been assumed that the unique key would be generated every time the terminal 4 is switched on or off. This doesn't necessarily have to be the case, but this would be the maximum time that would be allowed lapse between the generation of a new unique key for each terminal 4. It will be appreciated, however, that this could be done at any relevant time, it could be prefixed for special times of the day, it could be done by sensing the load on the terminal 4 and then cancelling the original key and generating a new unique key and in that latter case, it would generally be preferable only to regenerate the key at some specified time interval as it would be injudicious to have the key regenerated on a regular basis such as, for example, intervals of 5 or 10 minutes.

In the embodiment described above, it was suggested that the terminal 4 would have a fixed or permanent unique identifier. It is however envisaged that the unique terminal identifier could include a permanent identifier as well as a variable identifier. What has to be appreciated with the present invention is that because the unique key is being regenerated, there is nothing preventing when the unique key has been generated to, for example, generate a new variable identifier for the terminal 4, which variable identifier would be retained by the terminal until the key had been cancelled and a new unique key be produced.

Similarly while it is envisaged that the Diffie-Hellman will be provided in the normal manner, there is actually nothing preventing the use of an encryption system to transfer the information in relation to the numbers involved in the Diffie-Hellman algorithm.

One of the great advantages of the present invention is the manner in which the hardware and software interact so as to provide the optimum processing. For example, for 64-bit encryption, the execution speed will be 2.605 milliseconds giving a throughput of data of 24.6 Kbits per second. At the terminal end, each transaction requires encryption of 200 bytes and decryption of 50 bytes. Therefore, the execution time will be

$$2.605*(200+50)*8 + 64 = 81.40 \text{ milliseconds.}$$

The anticipated time for printing will be 0.5 seconds and the communications between the terminal 4 and the OLS server 12 will take approximately 0.8 seconds giving a total transaction time of 1.3814 seconds. It will be appreciated that the execution time for the encryption being 81.4 milliseconds is appreciably faster than current systems for encrypting data in the gaming industry. At the OLS server 12 end, the incoming data rate is 65 Kbits per second and the outgoing rate is 15 Kbits per second. The encryption/decryption engine must handle a combined rate of 80 Kbits per second. This represents 80 k $\div$ 64 = 1250 blocks per second. Therefore, the available time to execute is 1 $\div$ 1250 = 800 microseconds per block. The OLS server 12 can execute this is 1.4 microseconds. It will be appreciated that the loading on the OLS 12 is also dependent on the number of other terminals 4 addressing it. Thus, the number of requests and obviously their duration is critical for the OLS 12. Thus the encryption/decryption affects not just the terminal 4 and by reducing the time at the terminal 4 there are corresponding advantages at the host.

A further feature of the invention is the use of the plug-in card which can be easily upgraded if required. The custom logic chip 77 on the card 7 is also easily upgraded and scalable. If further throughput of transactions is required, then these may be upgraded in the future. Upgradings may take place in any way in that all terminals 4 do not have to be upgraded and terminals 4 may be upgraded only as required.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied within the scope of the claims.

**Claims**

1. A dynamic validation system for high speed data processing with cryptography comprising:

   a host (1) having a main system processor;

   a plurality of terminals (4) each having a terminal processor;

   a public communications network (2) connecting the host (1) and terminals (4);

   a secure server database (11) for the host (1) comprising for each terminal (4) a unique encryption key, a unique terminal identifier and a unique public communications network location identifier, characterised in that the host (1) and the terminals (4) communicate at regular intervals by one cryptographic system to generate a new unique key for each terminal for subsequent encryption of data by another cryptographic system;

   each terminal (4) includes a separate plug in card (7) having a processor (75) and a separate custom logic chip (77); and

   in which the encryption and decryption of data is shared between one of the processors and the custom logic chip (77).

2. A system as claimed in claim 1 in which the processor used for encryption and decryption of data is the card processor (75).

3. A system as claimed in claim 1 or 2 in which the cryptographic system used for generation of the encryption key for each terminal (4) is one which is not time critical and may require considerably more computational time than for subsequent encryption of data which has a computational throughput of more than 20 K bits per second for each terminal (4).

4. A system as claimed in claim 3 in which the computational throughput for subsequent encryption of data is more than 50 K bits per second.

5. A system as claimed in any preceding claim in which the new unique encryption key for each terminal (4) is generated at least every twenty four hours.

6. A system as claimed in any preceding claim in which the new unique encryption key for each terminal (4) is generated each time the terminal (4) is powered on.

7. A system as claimed in any preceding claim in which the new unique encryption key for a terminal (4) is generated when the volume of traffic being handled by the terminal (4) falls below a predetermined level.

8. A system as claimed in claim 7 in which there is set a time interval within which the generation of the encryption key and the subsequent cancellation and replacement by the new encryption key will not take place.

9. A system as claimed in claim 8, in which the time interval is greater than two hours.

10. A system as claimed in any preceding claim in which a terminal's encryption key is deleted on the terminal (4) being powered off.

11. A system as claimed in any preceding claim in which:

    the unique terminal identifier includes a permanent identifier and a variable identifier;

    the host (1) has a means for generating unique variable identifiers;

    at defined time intervals the host generates a new variable identifier and transmits it to the terminal (4) for cancellation of the previous variable identifier and for subsequent use; and

    the terminal (4) includes permanent storage means for storing the variable identifier until another identifier is generated.

12. A system as claimed in claim 11 in which subsequent to generation of a new key the unique variable identifier is generated.

13. A system as claimed in any preceding claim in which each card (7) has a storage buffer, is connected to the terminal (4) through a communications port and in which an inhibiting means is provided for the board for preventing the transmission of other data to the communications port from the terminal (4) as long as data from a current transmission is being processed by the card (7).

14. A system as claimed in claim 13, in which on opening the COM port, the signaling means indicates whether encryption or decryption is to take place.

15. A system as claimed in any preceding claim in which the unique key is produced by a Diffie-Hellman algorithm.

16. A system as claimed in claim 15 in which the Diffie-Hellman algorithm is generated and transmitted by the other cryptographic system using the previously generated unique key.

17. A system as claimed in any preceding claim in which the cryptographic system for the data is a DES algorithm with S-box.

18. A system as claimed in claim 17 in which the S-box is encoded within the custom logic chip (77) of the plug in card (7).

19. A system as claimed in claim 17 in which the S-box is held on a register of the custom logic chip (77) and is changed each time the unique key is generated.

Fig. 1

EP 1 050 991 A1

Fig. 2

TERMINAL SIDE

HOST SIDE

```
┌─────────────────┐        ┌─────────────────┐
│ Terminal Switch │        │ Request for     │
│ On              │        │ key received    │
└─────────────────┘        └─────────────────┘
         │                          │
         ▼                          ▼
┌─────────────────┐        ┌─────────────────────┐
│ Transmit Request│        │ Validate Request    │
│ for key         │        │ using secure        │
└─────────────────┘        │ database of         │
         │                 │ identifiers         │
         ▼                 └─────────────────────┘
┌─────────────────┐                 │
│ Wait for p,g.   │                 ▼
└─────────────────┘        ┌─────────────────┐
         │                 │ Send p,g.       │
         ▼                 └─────────────────┘
┌─────────────────┐                 │
│ Generate u and  │                 ▼
│ transmit        │        ┌─────────────────┐
└─────────────────┘        │ Generate v      │
         │                 └─────────────────┘
         ▼                          │
┌─────────────────┐                 ▼
│ Wait for v      │        ┌─────────────────┐
└─────────────────┘        │ Send v          │
         │                 └─────────────────┘
         ▼                          │
┌─────────────────┐                 ▼
│ Compute K       │        ┌─────────────────┐
└─────────────────┘        │ Wait for u      │
         │                 └─────────────────┘
         ▼                          │
┌─────────────────┐                 ▼
│ Request latest  │        ┌─────────────────┐
│ device driver   │        │ Compute K       │
│ revision details│        └─────────────────┘
└─────────────────┘                 │
         │                          ▼
         ▼                 ┌─────────────────┐
     ◇ If device          │ Send device     │
       driver             │ driver          │
       outdated ◇         │ Revision details│
    NO │      YES         └─────────────────┘
       │       │                   │
       ▼       ▼                   ▼
  ┌──────────────────┐        ◇ If update
  │ Request device   │          requested ◇
  │ driver from      │               │
  │ server           │               ▼
  └──────────────────┘     ┌─────────────────┐
         │                 │ Download device │
         ▼                 │ driver          │
  ┌──────────────────┐     └─────────────────┘
  │ Download K to PCI│               │
  │ card             │               ▼
  └──────────────────┘        ┌──────────┐
         │                    │ End      │
         ▼                    └──────────┘
  ┌──────────────────┐
  │ Load Device      │
  │ Driver           │
  └──────────────────┘
```

# Fig. 3

Plaintext

IP

| L0 | | R0 |

+   f      K1

| L1=R0 | | R1=L0 xor f(RO,K1) |

+   f      K2

| L2=R1 | | R2=L1 xor f(R1,K2) |

| L15=R14 | | R15=L14 xor f(R14,K15) |

+   f      K16

| R16=L15 xor f(R15,K16) | | L16=R15 |

FP

Cyphertext

# Fig. 4

**Fig. 5**

100
**Terminal Switch On**

101
**Download Unique Identifier**

102
**Host receives request for Key**

103
**Consults Database**

104
**Accepts Request**

105
**Generates Key**

106
**Database**

107
**Terminal set up**

108
**Check Software Revision**

109
**Load Card Software**

To Fig. 7

**Fig. 6**

From
Fig. 6

110
Scan Slip

111
Process Slip for
transmission

112
Transmit plaintext data
via virtual Comport

113
Encrypt

114
Receive ciphertext in
Terminal

115
Transmit to Host

116
Receive transmission data in
Host

117
Host
Identify and authenticate
terminal

118
If Ciphertext

NO          YES

To
Fig. 8

**Fig. 7**

From Fig. 7

Lookup terminal key
Decrypt ciphertext — 119

NO

Process plaintext — 120

Compose response
message — 121

If encryption
required — 122

NO          YES

Lookup terminal key.
Encrypt message — 123

Compose response datablock — 124

Send datablock to terminal — 125

Terminal receives datablock — 127

To Fig 9

**FIG 8**

From Fig. 8

If Decryption Required ———127

NO

YES

Transmit Ciphertext via COM port ———128

Decrypt ———129

Plaintext Datablock to Terminal ———130

Process Datablock ———131

Print Receipt ———132

**Fig. 9**

European Patent Office

# EUROPEAN SEARCH REPORT

Application Number

EP 99 65 0038

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 325 432 A (GARDECK KEVIN ET AL) 28 June 1994 (1994-06-28) * the whole document * | 1,2 | H04L9/00 |
| Y | EP 0 600 646 A (PITNEY BOWES) 8 June 1994 (1994-06-08) | 1,2 | |
| A | * abstract * <br> * column 1, line 33 - line 45 * <br> * column 4, line 23 - line 54 * <br> * figure 1 * | 3-15, 17-19 | |
| Y | US 5 412 723 A (CANETTI RAN ET AL) 2 May 1995 (1995-05-02) | 1,2 | |
| A | * abstract * <br> * column 1, line 62 - column 2, line 38 * <br> * column 4, line 9 - line 45 * <br> * column 7, line 30 - line 50 * <br> * claim 1 * | 3-15, 17-19 | |

TECHNICAL FIELDS SEARCHED (Int.Cl.7)

H04L
G07F
G07B

The present search report has been drawn up for all claims

| Place of search | Date of completion of the search | Examiner |
|---|---|---|
| THE HAGUE | 7 October 1999 | Gautier, L |

EPO FORM 1503 03.82 (P04C01)

EP 1 050 991 A1

## ANNEX TO THE EUROPEAN SEARCH REPORT
## ON EUROPEAN PATENT APPLICATION NO.

EP 99 65 0038

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-1999

| Patent document cited in search report | | Publication date | Patent family member(s) | | Publication date |
|---|---|---|---|---|---|
| US 5325432 | A | 28-06-1994 | NONE | | |
| EP 0600646 | A | 08-06-1994 | US CA JP | 5388158 A 2109554 A,C 7005809 A | 07-02-1995 21-05-1994 10-01-1995 |
| US 5412723 | A | 02-05-1995 | EP JP | 0670645 A 7250060 A | 06-09-1995 26-09-1995 |

EPO FORM P0459

For more details about this annex : see Official Journal of the European Patent Office, No. 12/82

22